# EUROPÄISCHE PATENTSCHRIFT

(11) **EP 2 357 030 B1**
(45) Veröffentlichungstag und Bekanntmachung des Hinweises auf die Patenterteilung: **11.05.2022**
(21) Anmeldenummer: 11000940.4
(22) Anmeldetag: 07.02.2011
(51) Int. Cl.: B01D 35/147

(54) **Filtervorrichtung, insbesondere Rücklaufsaugfilter**
Filter device, in particular reverse stroke suction filter
Dispositif de filtration, notamment filtre d'aspiration anti-retour

(30) Priorität: 09.02.2010 DE 102010007248
(43) Veröffentlichungstag der Anmeldung: 17.08.2011
(73) Patentinhaber: Hydac Filtertechnik GmbH, 66280 Sulzbach/Saar (DE)
(72) Erfinder: Lauer, Viktor Josef, 66809 Nalbach (DE); Marschall, Stefan, 66578 Schiffweiler (DE)
(74) Vertreter: Bartels und Partner, Patentanwälte

(56) Entgegenhaltungen:
- WO-A1-2009/050752
- DE-A1- 4 206 420
- DE-A1-102007 018 712
- DE-A1-102007 056 362
- DE-A1-102008 027 424
- DE-C1- 19 917 031

## Beschreibung

Die Erfindung betrifft eine Filtervorrichtung, insbesondere Rücklaufsaugfilter, mit den Merkmalen im Oberbegriff von Anspruch 1.

Filtervorrichtungen dieser Art sind in verschiedenen Bauformen im Handel frei erhältlich. In großem Umfang werden derartige Filtervorrichtungen zur Filtration von Arbeitsfluiden, wie Hydraulikflüssigkeiten, Kraftstoffen, Schmierstoffen und dergleichen, eingesetzt. Eine derartige Vorrichtung in Form eines Saugfilters ist beispielsweise in dem Prospekt D7.108.2/06.07 der Anmelderin mit der Produktbezeichnung "Rücklaufsaugfilter RKM" beschrieben und in unterschiedlichen Druckstufen (bis 10 bar) und für verschiedene Rücklaufvolumenströme (bis 100 l/min) im Handel erhältlich.

Weiterhin offenbart das Dokument DE 10 2007 056 362 A1 eine derartige Filtervorrichtung. Solche Vorrichtungen kommen in Hydrauliksystemen in Fällen zum Einsatz, wo im System sowohl ein offener Hydraulikkreislauf (z.B. eine Arbeitshydraulik) als auch ein geschlossenes hydrostatisches System vorhanden sind (z.B. ein Fahrantrieb). Rücklauf-Saugfilter können hierbei sowohl die Funktion des Rücklauffilters des offenen Kreises als auch die Funktion des Saugfilters des geschlossenen Kreises (Antrieb) übernehmen, vorausgesetzt, dass der Rücklaufstrom des offenen Hydrauliksystems nicht kleiner ist als der Volumenstrom der Speisepumpe für das hydrostatische System. Um die Funktionsfähigkeit des über die Speisepumpe zu versorgenden hydrostatischen Systems in Fällen aufrecht zu erhalten, in denen eine Verringerung des Rücklaufstroms zu einem Ausfall des Rücklaufdruckes führt, erfüllt das Nachsaugventil eine Art Notfunktion, indem es bei einem anstehenden Saugdruck öffnet, so dass vom Tank her eine Fluidmenge zur Saugseite der Speisepumpe des hydrostatischen Kreises gelangen kann und daher kein Ausfall des beispielsweise angeschlossenen Fahrantriebes erfolgt.

Bei diesen dem Stand der Technik entsprechenden Lösungen ist das Nachsaugventil jeweils als ein in die Sperrstellung vorgespanntes Rückschlagventil ausgebildet, das bei einem auf der Saugseite der Speisepumpe herrschenden Unterdruck öffnet.

Bei Fluidsystemen, namentlich Hydrauliksystemen, bei denen Filtervorrichtungen zum Einsatz kommen, hängt die Betriebssicherheit des Systems in hohem Maße von der sicheren Funktion der im System befindlichen Filtervorrichtung ab. Mit anderen Worten gesagt, kann ein Versagen der Filtervorrichtung über den Ausfall des zugehörigen Systems hinaus zu einer schwerwiegenden Beschädigung des Systems führen und dadurch hohe wirtschaftliche Schäden verursachen. Da die einwandfreie Funktion des jeweiligen Filterelementes der Filtervorrichtung von ausschlaggebender Bedeutung ist, ist es erforderlich, nach Ablauf entsprechender Betriebsintervalle jeweils einen Austausch verbrauchter Filterelemente gegen frische Filterelemente durchzuführen. Durch die entsprechenden Maßnahmen entsteht ein nicht unerheblicher Arbeitsaufwand, insbesondere weil auch darauf geachtet werden muss, dass bei der Entnahme verbrauchter Filterelemente keine am Filterelement befindlichen oder im Filtergehäuse befindlichen Restfluide als Schmutzstoffe in die Umgebung gelangen können.

Die DE 10 2007 018 712 A1 beschreibt eine Filtervorrichtung, insbesondere einen Rücklaufsaugfilter, mit mindestens einem Filtergehäuseteil, in dem mindestens ein Filterelement über mindestens eine Filterelementaufnahme festlegbar ist, und mit einem Vorspannventil, das das mittels des Filterelementes gefilterte Fluid auf ein vorgebbares Druckniveau in Richtung eines anschließbaren Verbrauchers vorspannt, wobei ein Nachsaugventil zur Nachversorgung des Verbrauchers im Fall einer Minderversorgung eine fluidführende Verbindung zwischen einer Vorratsquelle, insbesondere Tank, und der Filtrat- oder Reinseite des Filterelementes herstellt, wobei das Nachsaugventil einen Sperrkolben aufweist, der mittels eines Energiespeichers in eine die fluidführende Verbindung freigebende Stellung vorgespannt ist und der im Filtrationsbetrieb ohne Nachversorgung gegen die Wirkung des Energiespeichers durch das am Sperrkolben wirksame Druckniveau in die die Verbindung sperrende Stellung überführbar ist.

Im Hinblick hierauf stellt sich die Erfindung die Aufgabe, eine Filtervorrichtung zur Verfügung zu stellen, die sich durch ein verbessertes Betriebsverhalten insofern auszeichnet, als Filterelementwechsel besonders einfach und sicher durchführbar sind.

Erfindungsgemäß ist diese Aufgabe durch eine Filtervorrichtung gelöst, die die Merkmale des Patentanspruches 1 in seiner Gesamtheit aufweist.

Demgemäß besteht eine wesentliche Besonderheit der Erfindung darin, dass das Nachsaugventil in Form eines Schieberventils vorgesehen ist, dessen Ventilgehäuse an der Filterelementaufnahme derart angeordnet ist, dass es an einem Gehäuseende zum Tank hin offen ist und einen Fluideingang von der Reinseite des Filterelementes her aufweist, und dass der Sperrkolben als Schieberkolben im Ventilgehäuse axial verschiebbar ist, um den Fluidweg zwischen Fluideingang und dem offenen Gehäuseende freizugeben oder zu sperren.

Es ist ferner vorgesehen, dass das Nachsaugventil einen Sperrkolben aufweist, der mittels eines Energiespeichers beaufschlagt ist und im Filtrationsbetrieb ohne Nachversorgung, d.h. während der normalen Filtration bei auf der Reinseite herrschendem, vom Vorspannventil festgelegten Druckniveau, die fluidführende Verbindung zwischen Reinseite und Tank sperrt, jedoch bei Entnahme des Filterelementes, wenn also die Reinseite drucklos ist, diese Verbindung zum Tank hin freigibt. Anders als beim Stand der Technik, wo das als federbelastetes Rückschlagventil ausgebildete Nachsaugventil bei druckloser Reinseite geschlossen ist, bildet das Filtergehäuse bei der Erfindung beim Auswechselvorgang des Filterelementes sozusagen eine zum Tank hin geöffnete Abtropfschale, aus der das jeweilige Filterelement in abgetropftem Zustand entnommen werden kann, so dass die Gefahr der Umweltverschmutzung, ohne dass entsprechende, zusätzliche Maßnahmen getroffen werden müssten, vermieden ist. Der Vorgang des Filterwechsel gestaltet sich somit besonders einfach und sicher.

In besonders vorteilhafter Weise kann die Anordnung so getroffen sein, dass das Ventilgehäuse auch an dem der Reinseite des Filterelementes zugeordneten Ende eine Öffnung aufweist, über die ein Ende des Schieberkolbens mit dem auf der Reinseite herrschenden Fluiddruck als Steuerdruck des Ventils beaufschlagbar ist, wobei der Energiespeicher in Form einer Feder bei Entnahme des Filterelementes und fehlendem Steuerdruck den Schieberkolben in die Freigabestellung bewegt, aus der der Schieberkolben durch den im Filtrationsbetrieb wirkenden Steuerdruck gegen die Wirkung der Feder in die Sperrstellung bewegt wird. Die Charakteristik der Feder ist hierbei so ausgelegt, dass im normalen Filtrationsbetrieb das durch das Vorspannventil vorgegebene Druckniveau als Steuerdruck am Schieberkolben eine die Wirkung der Feder übersteigende Schließkraft erzeugt, bei Entnahme des Filterelementes und damit fehlendem Steuerdruck der Schieberkolben jedoch in die Öffnungsstellung gelangt.

In vorteilhafter Weise kann dabei die Anordnung so getroffen sein, dass das Ventilgehäuse an dem der Reinseite zugehörigen Ende die Form eines offenen Rohres besitzt, an dem ein Anschlagmittel, beispielsweise ein Sprengring, den Austritt des Schieberkolbens verhindert, der durch die Feder gegen das Anschlagmittel hin vorgespannt ist.

Im Hinblick auf eine besonders einfache und kompakte Bauweise kann das Ventilgehäuse an der Filterelementaufnahme als einstückiger Bestandteil des beweglichen Schließkörpers des Vorspannventiles bewegbar angeordnet sein.

In ähnlicher Weise wie bei dem zuvor erwähnten Ausführungsbeispiel kann auch bei diesem letztgenannten Ausführungsbeispiel das Ventilgehäuse die Form eines Rohrkörpers besitzen, wobei dieser in diesem Fall jedoch mit einer radial vorspringenden, den Schließkörper des Vorspannventiles bildenden Scheibe versehen ist.

Das durch den Rohrkörper gebildete Ventilgehäuse kann im Bereich der Reinseite der Filterelementaufnahme als Fluideingang mindestens eine Wandöffnung aufweisen, über die bei der Freigabestellung des Schieberkolbens der Fluidweg zu dem dem Tank zugeordneten, offenen Ende des Rohrkörpers hin freigebbar ist.

Dabei kann die Anordnung so getroffen sein, dass das Ventilgehäuse zwischen den jeweiligen Wandöffnungen und dem der Reinseite zugehörigen Ende einen erweiterten Bereich aufweist, in dem der als Stufenkolben ausgebildete Schieberkolben mit seinem Betätigungsteil verfahrbar geführt ist, wobei der Schieberkolben an seinem den kleineren Durchmesser aufweisenden Steuerteil die jeweiligen Wandöffnungen steuernde Steuerkanten bildet, und wobei in dem zwischen Steuerteil und dem erweiterten Betätigungsteil des Schieberkolbens im Ventilgehäuse gebildeten Raum die Feder vorgesehen ist, die sich am Betätigungsteil abstützt, um den Schieberkolben gegen das der Reinseite zugehörige offene Ende des Ventilgehäuses in die Freigabestellung und zur Anlage am Anschlagmittel vorzuspannen. Ein derartiges Ausführungsbeispiel zeichnet sich durch eine besonders kompakte Bauweise aus.

Nachstehend ist die Erfindung anhand von in der Zeichnung dargestellten Ausführungsbeispielen im Einzelnen erläutert. Es zeigen:

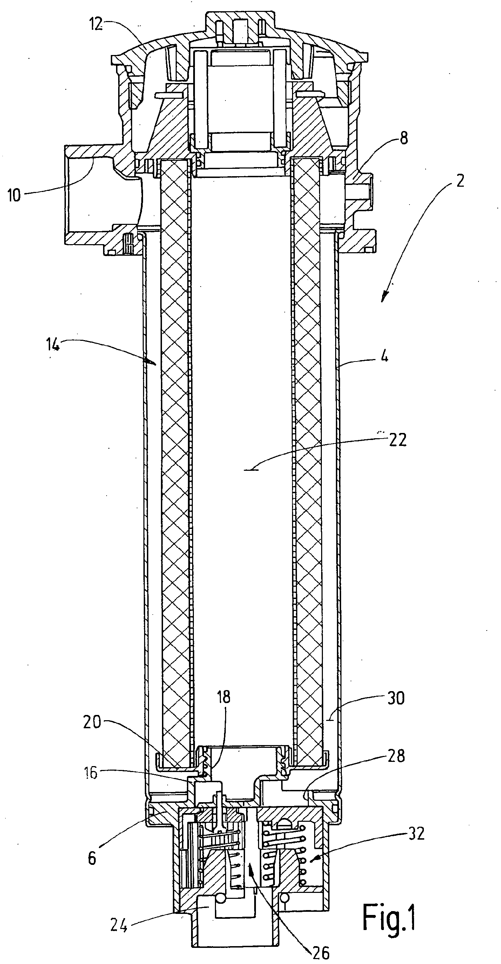

- Fig. 1: einen Längsschnitt eines Rücklaufsaugfilters üblicher Bauweise;
- Fig. 2: einen gegenüber Fig. 1 in größerem Maßstab und abgebrochen dargestellte Teillängsschnitt lediglich des an die Filterelementaufnahme angrenzenden Bereiches eines Ausführungsbeispieles der erfindungsgemäßen Filtervorrichtung;
- Fig. 3: einen der Fig. 2 ähnlichen Teillängsschnitt eines zweiten Ausführungsbeispieles der erfindungsgemäßen Filtervorrichtung;
- Fig. 4: einen gegenüber Fig. 2 stark vergrößert dargestellten Längsschnitt des Nachsaugventiles des Ausführungsbeispieles von Fig. 2; und
- Fig. 5: eine gegenüber Fig. 3 ebenfalls stark vergrößert dargestellte Schnittdarstellung lediglich des Nachsaugventiles des zweiten Ausführungsbeispieles der erfindungsgemäßen Filtervorrichtung.

Ein als Ganzes mit 2 bezeichnetes Filtergehäuse weist einen hohlzylinderförmigen Hauptteil 4 auf, der an seinem bodenseitigen Ende durch ein Gehäuse-Bodenteil 6 abgeschlossen ist. An das obere Ende des Hauptteiles 4 schließt sich ein Gehäuseoberteil 8 an, das in der bei derartigen Filtergehäusen üblichen Art und Weise Fluidführungen aufweist, von denen in der Zeichnung ein Fluideinlass 10 sichtbar ist, über den abzureinigendes Fluid zu dem beim Filtervorgang die Schmutzseite bildenden Raum 30 im Filtergehäuse 2 zuführbar ist. Eine im Oberteil 8 vorgesehene weitere Fluidführung, die mit dem beim Filtervorgang die Reinseite 22 bildenden Raum in Verbindung ist, führt zu einem Auslass für den Austritt abgereinigten Fluides aus dem Gehäuseoberteil 8, wobei dieser Auslass in der Zeichnung, da er gegenüber der Zeichnungsebene um 90° verdreht ist, nicht sichtbar ist. Am oberen Ende des Gehäuseoberteiles 8 befindet sich ein Schraubdeckel 12, der zum Einsetzen und Entnehmen eines Filterelementes 14 abnehmbar ist.

Um das Filterelement 14 in Form einer Filterpatrone im Filtergehäuse 2 festzulegen, bildet das Bodenteil 6 eine Filterelementaufnahme 16, die einen vom Bodenteil 6 gegen das Oberteil 8 hin vorspringenden Rohrstutzen 18 aufweist, auf den die bodenseitige Endkappe 20 des Filterelementes 14 unter Bildung einer Dichtung aufschraubbar ist. Der beim Filtrationsbetrieb die Reinseite bildende innere Filterhohlraum 22 des Filterelementes 14 steht über den Rohrstutzen 18 sowie über einen Durchgang im Bodenteil 6 mit der Vorratsquelle, d. h. der Tankseite 24, in Verbindung, wobei sich an diesem Durchgang eine Ventilanordnung 26 in Form eines kombinierten Nachsaug- und Vorspannventils befindet. Ein im Bodenteil 6 befindlicher weiterer Fluiddurchgang 28 verbindet den beim Filtrationsbetrieb die Schmutzseite bildenden Raum 30 mit einem Bypassventil 32, das bei Druckbetätigung einen Druckabbau über den Durchgang 28 zur Tankseite 24 hin ermöglicht.

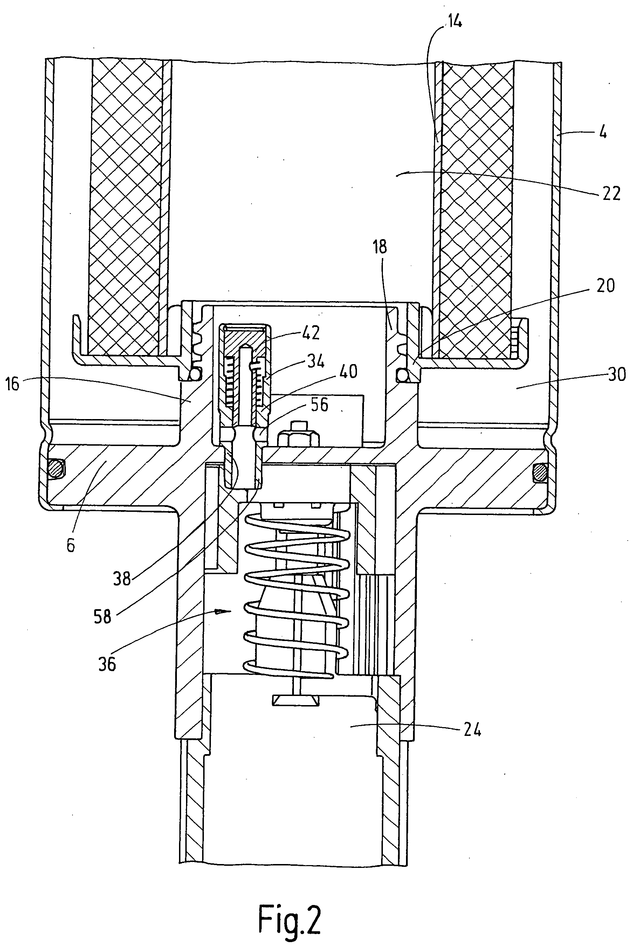

Bei dem in Fig. 2 gezeigten ersten Ausführungsbeispiel der erfindungsgemäßen Vorrichtung, wobei bei der Darstellung von Fig. 2 das Bypassventil nicht sichtbar ist, bilden Nachsaugventil 34 und Vorspannventil 36 am Bodenteil 6 gesonderte Bauteile aus. Das federbelastete Vorspannventil 36 hält beim Filtrationsvorgang Durchgänge (in Fig. 2 nicht gezeigt) des Bodenteiles 6 geschlossen, sodass beim normalen Filtrationsvorgang im Raum 22 der Reinseite ein vorgegebenes Druckniveau beibehalten ist. Das Nachsaugventil 34 mit einem Ventilgehäuse 40 in Form eines Rohrkörpers 38, der sich durch das Bodenteil 6 hindurch zwischen Reinseite 22 und Tankseite 24 erstreckt, ist als Schieberventil in spezieller Weise so ausgebildet, dass es bei einer Entnahme des Filterelementes 14 als Ablaufventil wirkt, das eine fluidführende Verbindung zwischen Reinseite 22 und Tankseite 24 herstellt.

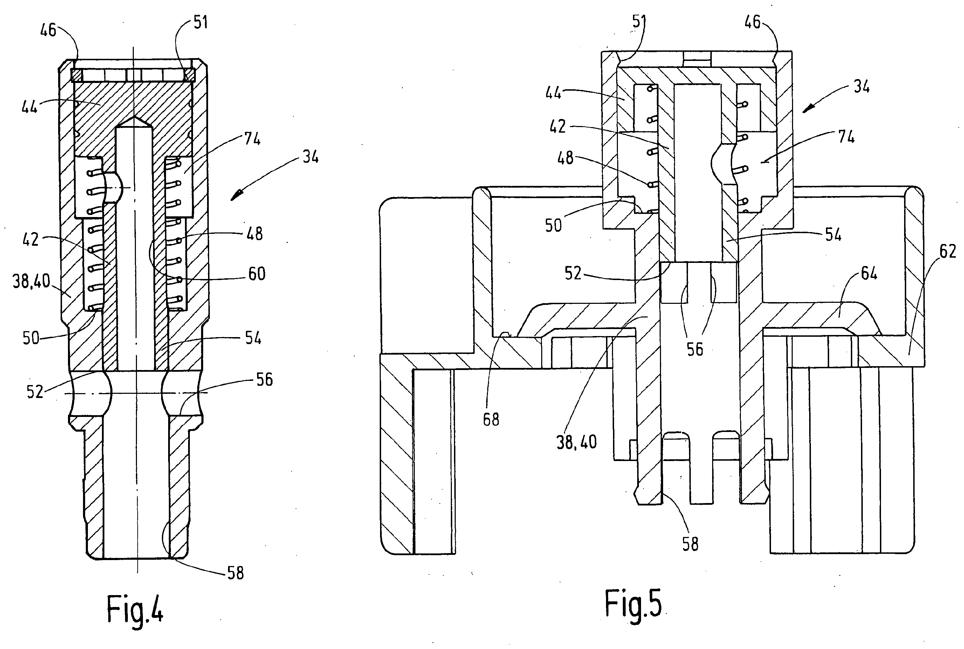

Die Bauweise des Nachsaugventils 34 ist am Deutlichsten der Fig. 4 entnehmbar. Wie ersichtlich, handelt es sich um ein Schieberventil mit einem Ventilgehäuse 40 in Form eines beidseitig offenen Rohrkörpers 38, in dem ein Sperrkolben in Form eines Schieberkolbens 42 axial verfahrbar geführt ist. An dem der Reinseite 22 zugewandten Ende bildet der Kolben 42 einen erweiterten Betätigungsteil 44, der an der Innenwand des Gehäuses 40 abgedichtet geführt ist. An der der Reinseite 22 zugewandten Gehäuseöffnung 46 ist das Ende des Betätigungsteiles 44 mit dem auf der Reinseite 22 herrschenden Druck als Steuerdruck beaufschlagt. Eine als Energiespeicher dienende Druckfeder 48, die sich an einer inneren Stufe 50 des Ventilgehäuses 40 und am Betätigungsteil 44 abstützt, spannt den Kolben 42 gegen die Öffnung 46 und zur Anlage an einem Anschlagmittel 51 in Form eines Sprengringes vor. Diese in Fig. 2 und 4 dargestellte Position ist die Freigabestellung des Ventils, bei der Steuerkanten 52, die sich am Ende des verjüngten Steuerteiles 54 des Kolbens 42 befinden, die Verbindung zwischen Wandöffnungen 56 des Ventilgehäuses 40 und dessen offenem, der Tankseite 24 zugewandten Ende 58 freigeben.

Wie Fig. 2 zeigt, befinden sich die Öffnungen 56 auf der der Reinseite 22 zugehörigen Seite des Bodenteiles 6. Die Öffnung am Ende 58 führt jedoch zur Tankseite 24. Beim normalen Filtrationsbetrieb ohne Nachversorgung, wobei auf der Reinseite 22 der durch das (nicht gezeigte) Vorspannventil vorgegebene Vorspanndruck herrscht, wirkt dieser als Steuerdruck auf das Betätigungsteil 44 des Kolbens 42, so dass dieser gegen die Wirkung der Feder 48 in der Zeichnung nach unten bewegt ist und in der Sperrstellung des Ventils die Verbindung zwischen Wandöffnungen 56 und Ende 58 des Gehäuses 40 sperrt. Wenn im Betrieb eine Nachversorgung erforderlich ist, d. h. das durch das Vorspannventil vorgegebene Druckniveau unterschritten ist, so dass der auf das Betätigungsteil 44 des Kolbens 42 wirkende Steuerdruck entsprechend verringert ist, verschiebt die Druckfeder 48 den Kolben 42 in die in Fig. 2 und 4 gezeigte Freigabestellung, so dass ein Nachsaugen über die Öffnung 58 und die Wandöffnungen 56 stattfinden kann. Zwischenstellungen zwischen den maximalen Endanschlägen des Kolbens 42 sind in Abhängigkeit des jeweils herrschenden Fluiddruckes möglich. Insoweit kann die jeweilige Wandöffnung 56 auch nur teilweise überdeckt sein.

Bei einer Entnahme des Filterelementes 14 aus dem Gehäuse 2, d. h. bei Betriebsstillstand und entsprechender Drucklosigkeit der Reinseite 22 befindet sich wegen des fehlenden Steuerdruckes der Kolben 42 wiederum in der Freigabestellung, so dass über das Ventil 34 wieder die fluidführende Verbindung zwischen Reinseite 22 und Tankseite 24 hergestellt ist. Restfluid, das bei der Entnahme vom verbrauchten Filterelement 14 abläuft und zum Bodenteil 6 des Filtergehäuses 2 abtropft gelangt nunmehr über das bei diesem Betriebszustand als Ablaufventil wirkende Nachsaugventil 34 zur Tankseite 24, so dass das Filtergehäuse eine bodenseitig zur Tankseite 24 offene Tropfschale bildet. Das Steuerteil 54 des Kolbens 42 weist einen inneren Ausgleichskanal 60 für einen Druckausgleich zu dem das Federgehäuse bildenden inneren Raum 74 des Ventilgehäuses 40 auf.

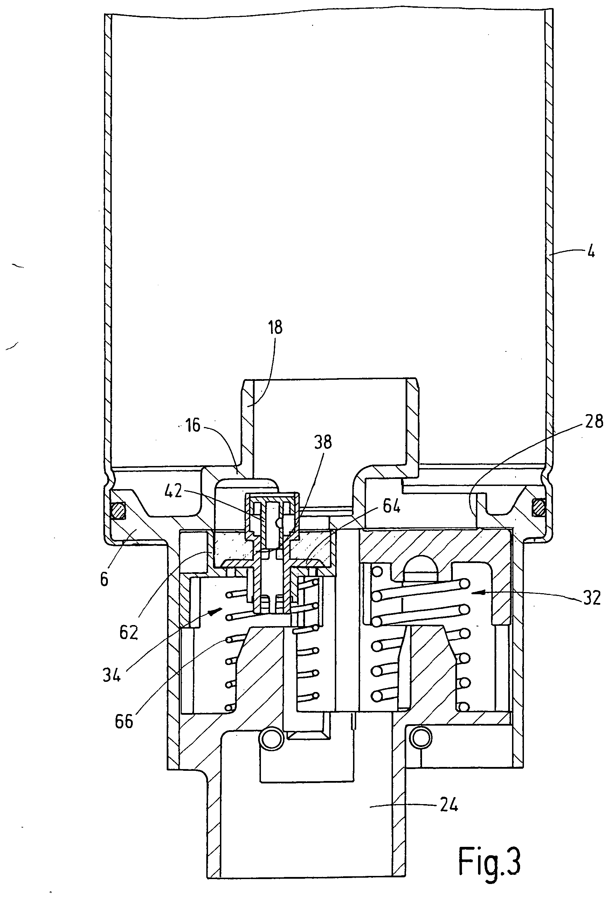

Während beim beschriebenen, ersten Ausführungsbeispiel der Kolbenschieber 42 auch den Schließkörper des Vorspannventiles bildet, ist bei dem in Fig. 3 und 5 gezeigten zweiten Ausführungsbeispiel der Vorrichtung ein eigener Schließkörper für das Vorspannventil vorgesehen, zusätzlich zu dem Schieberkolben 42. Wie beim erstbeschriebenen Ausführungsbeispiel ist das Ventilgehäuse des Nachsaugventils 34 ein an beiden Enden offener Rohrkörper 38, der in einem am Bodenteil 6 befindlichen Ventileinsatz 62 axial verschiebbar ist. Als Schließkörper des Vorspannventils weist der das Ventilgehäuse 40 bildende Rohrkörper 38 eine radial vorspringende Scheibe 64 auf, die am Rohrkörper des Ventilgehäuses 40 einstückig angeformt ist. Die Fig. 3 und 5 zeigen einen Betriebszustand, bei dem die als Druckfeder gebildete Schließfeder 66 (Fig. 3) das Vorspannventil durch Anlage der Scheibe 64 an einer Ventilsitzfläche 68 geschlossen hält und sich der Schieberkolben 42 als Sperrkolben des Ablaufventiles in der Öffnungsstellung befindet, in der Wandöffnungen 56 des Gehäuses 40 die fluidführende Verbindung zwischen Reinseite 22 und, über das offene Ende 58 des Gehäuses 40, zur Tankseite 24 hin bilden. Wie beim zuerst beschriebenen Ausführungsbeispiel verhindert an dem der Reinseite 22 zugehörigen offenen Ende des Gehäuses 40 ein Anschlagmittel 51 den Austritt des Kolbens 42, wenn sich dieser bei fehlendem, auf das Betätigungsteil 44 einwirkenden Steuerdruck durch die Wirkung der Feder 48 am oberen Ende des Gehäuses 40 befindet. Wie beim erstbeschriebenen Ausführungsbeispiel ist der Kolben 42 als Stufenkolben ausgebildet, wobei das Betätigungsteil 44 gegenüber dem Steuerteil 54 einen größeren Durchmesser besitzt und an der im Gehäuse 40 gebildeten Stufe 50 sich die Feder 48 abstützt, die in dem im Gehäuse 40, in dem an die Stufe 50 angrenzenden Freiraum 74, untergebracht ist. Am Ende 58 der Scheibe 64 ist ein verbreiterter Anschlag angeformt, der in der oberen Verfahrstellung der Scheibe 64 deren Verfahrweg begrenzt, in dem der genannte Anschlag in Anlage mit dem unteren Ende des hülsenartigen Fortsatzes des Ventileinsatzes 62 kommt.

Hinsichtlich der Funktion als Ablaufventil entspricht das Ausführungsbeispiel gemäß Fig. 3 und 5 dem erstbeschriebenen Ausführungsbeispiel, sodass bei fehlendem Steuerdruck die Fluidverbindung zwischen Reinseite 22 und Tankseite 24 gegeben ist. Wenn jedoch beim Filtrationsbetrieb Bedarf für eine Nachversorgung gegeben ist und auf der Reinseite 22 ein Saugdruck herrscht, dann arbeitet das Nachsaugventil 34 wie ein übliches Rückschlagventil, sodass die als Schließkörper dienende Scheibe 64 von der Sitzfläche 68 abhebt und einen Strömungsweg für den Nachsaugstrom freigibt, zusätzlich zu dem durch die offenen Wandöffnungen 56 fließenden Nachsaugstrom. Dadurch ist bei diesem Ausführungsbeispiel eine effektive Nachversorgung bei großen Strömungsquerschnitten mit geringem Druckverlust gewährleistet. Das Nachsaugventil 34 innerhalb der Filtervorrichtung ist insoweit auch als sperrbares Ablaufventil anzusehen, das dem Fluidablauf dient, sobald das Filterelement 14 für einen Austausch gegen ein Neuelement aus dem Filtergehäuse entnommen wird.

## Patentansprüche

1. Filtervorrichtung, insbesondere Rücklaufsaugfilter, mit mindestens einem Filtergehäuseteil (2, 4), in dem mindestens ein Filterelement (14) über mindestens eine Filterelementaufnahme (16) festlegbar ist, und mit einem Vorspannventil (36), das das mittels des Filterelementes (14) gefilterte Fluid auf ein vorgebbares Druckniveau in Richtung eines anschließbaren Verbrauchers vorspannt, wobei ein Nachsaugventil (34) zur Nachversorgung des Verbrauchers im Fall einer Minderversorgung eine fluidführende Verbindung (56, 58) zwischen einer Vorratsquelle, insbesondere Tank (24), und der Filtrat- oder Reinseite (22) des Filterelementes herstellt, wobei das Nachsaugventil (34) einen Sperrkolben (42) aufweist, der mittels eines Energiespeichers (48) in eine die fluidführende Verbindung (56, 58) freigebende Stellung vorgespannt ist und der im Filtrationsbetrieb ohne Nachversorgung gegen die Wirkung des Energiespeichers (48) durch das am Sperrkolben (42) wirksame Druckniveau in die die Verbindung (56, 58) sperrende Stellung überführbar ist, **dadurch gekennzeichnet, dass** das Nachsaugventil (34) in Form eines Schieberventils vorgesehen ist, dessen Ventilgehäuse (40) an der Filterelementaufnahme (16) derart angeordnet ist, dass es an einem Gehäuseende (58) zum Tank (24) hin offen ist und einen Fluideingang (56) von der Reinseite (22) des Filterelementes (14) her aufweist, und dass der Sperrkolben als Schieberkolben (42) im Ventilgehäuse (40) axial verschiebbar ist, um den Fluidweg zwischen Fluideingang (56) und dem offenen Gehäuseende (58) freizugeben oder zu sperren.

2. Filtervorrichtung nach Anspruch 1, **dadurch gekennzeichnet, dass** das Ventilgehäuse (40) auch an dem der Reinseite (22) des Filterelementes (14) zugeordneten Ende eine Öffnung (46) aufweist, über die ein Ende (44) des Schieberkolbens (42) mit dem auf der Reinseite (22) herrschenden Fluiddruck als Steuerdruck des Ventils beaufschlagt ist, und dass der Energiespeicher in Form einer Feder (48) bei Entnahme des Filterelementes (14) und fehlendem Steuerdruck den Schieberkolben (42) in die Freigabestellung bringt, aus der der Schieberkolben (42) durch den im Filtrationsbetrieb wirkenden Steuerdruck gegen die Wirkung der Feder (48) in die Sperrstellung bewegbar ist.

3. Filtervorrichtung nach Anspruch 1 oder 2, **dadurch gekennzeichnet, dass** das Ventilgehäuse (40) an dem der Reinseite (22) zugehörigen Ende die Form eines offenen Rohres besitzt, an dem ein Anschlagmittel (51), beispielsweise Sprengring, der Austritt des Schieberkolbens (42) verhindert, der durch die Feder (48) gegen das Anschlagmittel (51) hin vorgespannt ist.

4. Filtervorrichtung nach einem der Ansprüche 1 bis 3, **dadurch gekennzeichnet, dass** das Ventilgehäuse (40) am Bodenteil (6) als einstückiger Bestandteil des beweglichen Schließkörpers (64) des Vorspannventiles (36) bewegbar angeordnet ist.

5. Filtervorrichtung nach Anspruch 3, **dadurch gekennzeichnet, dass** das Ventilgehäuse (40) die Form eines Rohrkörpers (38) mit einer radial vorspringenden, den Schließkörper des Vorspannventiles bildenden Scheibe (64) besitzt.

6. Filtervorrichtung nach Anspruch 5, **dadurch gekennzeichnet, dass** das Ventilgehäuse (40) im Bereich der Reinseite (22) der Filterelementaufnahme (16) mindestens eine Wandöffnung (56) aufweist, über die bei der Freigabestellung des Schieberkolbens (42) der Fluidweg zu dem dem Tank (24) zugeordneten, offenen Ende (58) des Rohrkörpers (38) hin freigebbar ist.

7. Filtervorrichtung nach Anspruch 6, **dadurch gekennzeichnet, dass** das Ventilgehäuse (40) zwischen den jeweiligen Wandöffnungen (56) und dem der Reinseite (22) zugehörigen Ende einen erweiterten Bereich aufweist, in dem der als Stufenkolben ausgebildete Schieberkolben (42) mit seinem Betätigungsteil (44) verfahrbar geführt ist, wobei der Schieberkolben (42) an seinem den kleineren Durchmesser aufweisenden Steuerteil (54) die jeweiligen Wandöffnungen (56) steuernde Steuerkanten (52) bildet und wobei in dem zwischen Steuerteil (54) und dem erweiterten Betätigungsteil (44) des Schieberkolbens (42) im Ventilgehäuse (40) gebildeten Raum (74) die Feder (48) vorgesehen ist, die sich am Betätigungsteil (44) abstützt, um den Schieberkolben (42) gegen das der Reinseite (22) zugehörige offene Ende des Ventilgehäuses (40) in die Freigabestellung und zur Anlage am Anschlagmittel (51) vorzuspannen.

## Claims

1. Filter device, in particular return line suction filter, having at least one filter housing part (2, 4) in which at least one filter element (14) can be fixed via at least one filter element holder (16) and having a precharging valve (36) which precharges the fluid filtered by means of the filter element (14) to a predefinable pressure level in the direction of a connectable consumer, wherein a replenishing valve (34) for replenishing the consumer in the event of an insufficient supply establishes a fluid-conducting connection (56, 58) between a supply source, in particular a tank (24), and the filtrate side or clean side (22) of the filter element, wherein the replenishing valve (34) has a blocking piston (42) which is pretensioned by means of an energy accumulator (48) into a position unblocking the fluid-conducting connection (56, 58) and which, in filtration operation without replenishment, can be transferred into the position blocking the connection (56, 58) against the action of the energy accumulator (48) due to the pressure level active at the blocking piston (42), **characterised in that** the replenishing valve (34) is provided in the form of a slide valve, the valve housing (40) of which is arranged on the filter element holder (16) in such a manner that it is open towards the tank (24) at one housing end (58) and has a fluid inlet (56) coming from the clean side (22) of the filter element (14), and **in that** the blocking piston as a spool (42) is axially displaceable in the valve housing (40) in order to allow or block the fluid path between the fluid inlet (56) and the open housing end (58).

2. Filter device according to claim 1, **characterised in that** the valve housing (40) also has, at the end associated with the clean side (22) of the filter element (14), an opening (46) via which one end (44) of the spool (42) is acted upon by the fluid pressure prevailing on the clean side (22) as the control pressure of the valve, and **in that**, when the filter element (14) is removed and there is no control pressure, the energy accumulator in the form of a spring (48) brings the spool (42) into the release position from which the spool (42) can be moved into the blocking position against the action of the spring (48) by the control pressure acting during filtration operation.

3. Filter device according to claim 1 or 2, **characterised in that** the valve housing (40) has, at the end associated with the clean side (22), the shape of an open tube on which an abutment means (51), for example a circlip, prevents the spool (42) from exiting, the spool being prestressed by the spring (48) against the abutment means (51).

4. Filter device according to one of claims 1 to 3, **characterised in that** the valve housing (40) is movably arranged on the base part (6) as an integral component of the movable closing body (64) of the precharging valve (36).

5. Filter device according to claim 3, **characterised in that** the valve housing (40) has the shape of a tubular body (38) with a radially protruding disc (64) forming the closing body of the precharging valve.

6. Filter device according to claim 5, **characterised in that** the valve housing (40) has, in the region of the clean side (22) of the filter element holder (16), at least one wall opening (56) via which, when the spool (42) is in the release position, the fluid path can be released towards the open end (58) of the tubular body (38) associated with the tank (24).

7. Filter device according to claim 6, **characterised in that** the valve housing (40) has, between the respective wall openings (56) and the end associated with the clean side (22), a widened region in which the spool (42), configured as a stepped piston, is guided in a displaceable manner with its actuating part (44), wherein the spool (42) forms control edges (52) controlling the respective wall openings (56) on its control part (54) having the smaller diameter and wherein in the space (74) formed between the control part (54) and the extended actuating part (44) of the spool (42) in the valve housing (40), the spring (48) is provided which is supported on the actuating part (44) in order to prestress the spool (42) against the open end of the valve housing (40) associated with the clean side (22) into the release position and for abutment against the abutment means (51).

## Revendications

1. Dispositif de filtration, notamment filtre d'aspiration de reflux, comprenant au moins une partie (2, 4) d'enveloppe de filtre, dans laquelle au moins un élément (14) de filtre peut être fixé par un au moins un logement (16) d'élément de filtre, et comprenant une soupape (36) d'élévation de la pression, qui élève la pression du fluide filtré au moyen d'un élément (14) de filtre à un niveau pouvant être donné à l'avance, en direction d'un utilisateur raccordable, dans lequel une soupape (34) de ré-aspiration, pour la réalimentation de l'utilisateur dans le cas d'une alimentation moindre, produit une liaison (56, 58) fluidique entre une source de réserve, notamment un réservoir (24), et le côté (22) du filtrat ou le côté propre de l'élément de filtre, dans lequel la soupape (34) de ré-aspiration a un piston (42) de blocage, qui, au moyen d'un accumulateur (48) d'énergie, est précontraint dans une position dégageant la liaison (56, 58) fluidique et qui, en fonctionnement de filtration sans réalimentation, peut passer, à l'encontre de l'effet de l'accumulateur (48) d'énergie par le niveau de pression efficace sur le piston (42) de blocage, dans la position bloquant la liaison (56, 58), **caractérisé en ce que** la soupape (34) de ré-aspiration est prévue sous la forme d'un robinet vanne, dont le corps (40) est monté sur le logement (16) de l'élément de filtre, de manière à être ouvert vers le réservoir (24) à une extrémité (58) du corps et à avoir une entrée (56) de fluide à partir du côté (22) propre de l'élément (14) de filtre, et **en ce que** le piston de blocage peut, sous la forme d'un piston (42) coulissant, coulisser axialement dans le corps (40) du robinet vanne pour dégager ou bloquer le trajet de fluide entre l'entrée (56) de fluide et l'extrémité (58) ouverte du corps.

2. Dispositif de filtration suivant la revendication 1, **caractérisé en ce que** le corps (40) du robinet vanne a également, à l'extrémité tournée vers le côté (22) propre de l'élément (14) de filtre, une ouverture (46), par laquelle une extrémité (44) du piston (42) coulissant est soumis comme pression de commande du robinet vanne à la pression du fluide régnant du côté (22) propre, et **en ce que** l'accumulateur d'énergie, sous la forme d'un ressort (48), met, lorsque l'élément (14) de filtre est enlevé et lorsqu'il n'y a plus de pression de commande, le piston (42) coulissant dans la position de dégagement, de laquelle le piston (42) coulissant peut, par la pression de commande s'appliquant en fonctionnement de filtration, être mis dans la position de blocage à l'encontre de l'effet du ressort (48).

3. Dispositif de filtration suivant la revendication 1 ou 2, **caractérisé en ce que** le corps (40) du robinet vanne a, à l'extrémité appartenant au côté (22) propre, la forme d'un tuyau ouvert, sur lequel un moyen (51) de butée, par exemple un jonc élastique, empêche la sortie du piston (42) coulissant, qui est précontraint sur le moyen (51) de butée par le ressort (48).

4. Dispositif de filtration suivant l'une des revendications 1 à 3, **caractérisé en ce que** le corps (40) du robinet vanne est, comme partie constitutive d'une seule pièce de l'obturateur (64) mobile de la soupape (36) d'élévation de la pression, disposé avec possibilité de se déplacer sur la partie (6) de fond.

5. Dispositif de filtration suivant la revendication 3, **caractérisé en ce que** le corps (40) du robinet vanne a la forme d'un corps (38) tubulaire, ayant un disque (64) en saillie radialement et formant l'obturateur de la soupape d'élévation de la pression.

6. Dispositif de filtration suivant la revendication 5, **caractérisé en ce que** le corps (40) du robinet vanne a, dans la partie du côté (22) propre du logement (16) de l'élément de filtre, au moins une ouverture (56) de paroi, par laquelle, dans la position de dégagement du piston (42) coulissant, le trajet de fluide allant à l'extrémité (58) ouverte, affectée au réservoir (24), du corps (38) tubulaire peut être dégagé.

7. Dispositif de filtration suivant la revendication 6, **caractérisé en ce que** le corps (40) du robinet vanne a, entre les ouvertures (56) respectives de paroi et l'extrémité appartenant au côté (22) propre, une partie élargie, dans laquelle le piston (42) coulissant, constitué en piston à échelons et guidé avec possibilité de déplacer par sa partie (44) d'actionnement, dans lequel le piston (42) coulissant forme, sur sa partie (54) de commande ayant le diamètre le plus petit, des bords (52) de commande commandant les ouvertures (56) respectives de paroi, et dans lequel, dans l'espace (74) formé, entre la partie (54) de commande et la partie (44) d'actionnement élargie du piston (42) coulissant, dans le corps (40) du robinet vanne est prévu le ressort (48), qui s'appuie sur la partie (44) d'actionnement, pour précontraindre dans la position de dégagement et d'application au moyen (51) de butée, le piston (42) coulissant sur l'extrémité, ouverte et appartenant au côté (22) propre, du corps (40) du robinet vanne.
